# EUROPÄISCHE PATENTSCHRIFT

(11) **EP 0 647 072 B1**
(45) Veröffentlichungstag und Bekanntmachung des Hinweises auf die Patenterteilung: **02.04.2003**
(21) Anmeldenummer: 94109412.0
(22) Anmeldetag: 17.06.1994
(51) Int. Cl.: H04Q 1/14

(54) **Verteilereinrichtung für Fernmelde-, Signal-, Steuerkabel od. dgl.**
Distribution device for telephone, signal, control, or similar, cables
Dispositif de distribution pour câbles téléphoniques, de signalisation, de commande ou similaire

(30) Priorität: 06.09.1993 DE 4330050
(43) Veröffentlichungstag der Anmeldung: 05.04.1995
(73) Patentinhaber: Quante Aktiengesellschaft, 42109 Wuppertal (DE)
(72) Erfinder: Burmeister,Klaus-Dieter, D-42111 Wuppertal (DE); Rott,Joachim, D-14167 Berlin (DE)
(74) Vertreter: HOFFMANN - EITLE

(56) Entgegenhaltungen:
- EP-A- 0 133 824
- DE-A- 2 048 144
- DE-A- 2 901 766
- J P LUTZ & G ÄBERG: "Miniaturized cable cabinet" ERICSSON REVIEW, Bd. 41, Nr. 3, 1964, STOCKHOLM,SE, Seiten 124-129, XP002063344

## Beschreibung

Die Erfindung richtet sich auf eine Verteilereinrichtung der im Oberbegriff des Anspruches 1 angegebenen Art. Die Einrichtung hat die Aufgabe, die zahlreichen Adern der Kabel in der gewünschten individuellen Weise zu verlegen, anzuschließen und miteinander zu kontaktieren bzw. zu trennen.

Bei der bekannten Einrichtung dieser Art verwendete man als Träger Wannen, deren Wannenlängswände durch Schlitze in profilierte Zungen gegliedert waren. Mit diesen profilierten Zungen und Schlitzen wurden, in abwechselnder Reihenfolge, Drahtführungsscheiben und Anschlussleisten verbunden. Dazu besaßen sowohl die Scheiben als auch die Leisten Haltemittel, die mit den profilierten Zungen und Schlitzen der Wanne zusammenwirkten. Die Herstellung des wannenförmigen Trägers ist kostspielig und die Handhabung der Drahtführungsscheiben und der Anschlussleisten beim Befestigen an diesem Träger bzw. beim Lösen umständlich. Die dicht nebeneinander liegenden Haltemittel der Drahtführungsscheiben und der Anschlussleisten waren schwierig getrennt zu betätigen, weshalb ein bestimmter Abstand bei der Anordnung dieser Teile nicht unterschritten werden durfte.

Sofern Zusatzeinrichtungen, wie Überspannungsschutz-Einrichtungen, verwendet werden sollten, besaß der bekannte wannenförmige Träger eine zusätzliche Höhenzone mit seitlichen Durchbrüchen, in welche leistenförmige Zusatzeinrichtungen eingeschoben werden konnten. Zugehörige Massekontaktierungen befanden sich am Wannenboden des Trägers. Dadurch fiel die bekannte Verteilereinrichtung besonders platzaufwendig aus.

Aus der EP 0 133 824 A1 ist eine modulare Anschlussvorrichtung für Telefonverteiler bekannt, die auf einem Träger beispielsweise einem senkrechten Stab, befestigt werden kann und dem Verbinden, Rangieren oder Trennen einer Vielzahl von ankommenden oder abgehenden Adern von Kabeln dient. Das gehäuseartige Modul, das sich an jeder beliebigen Position des Trägers befestigen lässt, besteht aus zwei sich gegenüberstehenden, scheibenförmigen Doppelwandungen, die bogenförmige Kanäle zum Hindurchfädeln der Adern beinhalten, und somit eine Verbindung zwischen einer entsprechenden Seitenfläche des Moduls mit einer Reihe von Kontakten auf der Oberseite des Moduls. In dem Modul sind Überspannungsschutzmöglichkeiten in Form von Trennkontakten vorgesehen. Zur Herstellung des Kontaktes zwischen ankommenden und abgehenden Adern ist ein Kontaktträger vorgesehen, der zusammen mit einem Sockel zwischen den zwei sich gegenüberstehenden Doppelwänden angeordnet ist und die wesentlichen Teile des Moduls darstellen. Zwei scheibenförmige Doppelwandungen bilden dabei jeweils mit dem Kontaktträger und mit dem Sockel eine untrennbare Einheit.

Dies ist jedoch dann von Nachteil, wenn der Kontaktträger durch einen Defekt eine Verbindung entweder nicht ordnungsgemäß herstellt oder unterbricht. Dann nämlich muss der defekte Kontaktträger mit samt dem Modul ausgetauscht werden, was zur Folge hat, dass die bereits durchgeführte Sortierung der Drähte in den Kanälen der Doppelwandungen verloren geht. Nach dem Ersetzen des alten Moduls durch ein neues müssen dann wieder die einzelnen Adern sortiert und in gewünschter Weise in die entsprechenden Kanäle eingefädelt werden. Dies ist umständlich und zeitaufwendig.

Der Erfindung liegt die Aufgabe zugrunde, eine preiswerte Verteilereinrichtung der im Oberbegriff des Anspruches 1 genannten Art zu entwickeln, die die aufgezeigten Nachteile vermeidet und die platzsparend ist und sich durch bequeme Handhabung des gehäuseartigen Moduls und der Anschlussleisten gegenüber dem Träger auszeichnet. Dies wird erfindungsgemäß durch die im Kennzeichen des Anspruches 1 angeführten Maßnahmen erreicht, denen folgende besondere Bedeutung zukommt.

Bei der vorliegenden Erfindung ist das Gehäuse zur Oberseite hin offen und bildet eine Aufnahmebuchse zum Einstecken einer dem Gehäuse zugeordneten Anschlussleiste. Im Kupplungsfall entsteht also aus dem Gehäuse einerseits und der Anschlussleiste andererseits eine Baueinheit. Diese Bestandteile der Baueinheit sind lösbar durch Haltemittel aneinander gesichert, welche nur zwischen der Anschlussleiste und dem Gehäuse wirken. Für die Anschlussleiste brauchen daher am Träger keine Vorkehrungen mehr getroffen zu werden. Die Baueinheit greift vielmehr ausschließlich mit den am Gehäuse befindlichen Haltemitteln am Träger an, weshalb der Träger sehr einfach gestaltet sein kann. Er kann aus einer gleichförmig durchlaufenden Profilschiene bestehen. Ferner kann eine defekte Anschlussleiste, nach dem Lösen der Haltemittel mit ankommenden und abgehenden Adern von Kabeln, vom Gehäuse getrennt und durch eine neue ersetzt werden. Dabei bleibt jedoch die Sortierung der Adern erhalten, da diese in den Kanälen der Drahtführungsscheiben verbleiben. Ein Abziehen des gesamten Gehäuses vom Träger ist vorteilhafterweise nicht notwendig.

Weitere Maßnahmen und Vorteile der Erfindung ergeben sich aus den Ansprüchen, der nachfolgenden Beschreibung und den Zeichnungen. In den Zeichnungen ist die Erfindung in einem Ausführungsbeispiel dargestellt. Es zeigen:
- Fig. 1,: in perspektivischer, schematischer Darstellung ein die erfindungsgemäße Verteilereinrichtung kennzeichnendes Gehäuse,
- Fig. 2: und 3, teilweise im Ausbruch, die Vorderansicht und die Seitenansicht auf die Bestandteile der erfindungsgemäßen Verteilereinrichtung,
- Fig. 4: eine Draufsicht auf das in Fig. 1 gezeigte Gehäuse,
- Fig. 5: eine Schnittansicht durch den oberen Teil des Gehäuses längs der Schnittlinie V - V von Fig. 2 und
- Fig. 6: und 7 die Innenflächen eines Innenwandteils in Fig. 6 und eines Außenwandteils in Fig. 7, die zum Aufbau des Gehäuses von Fig. 1 und 2 dienen.

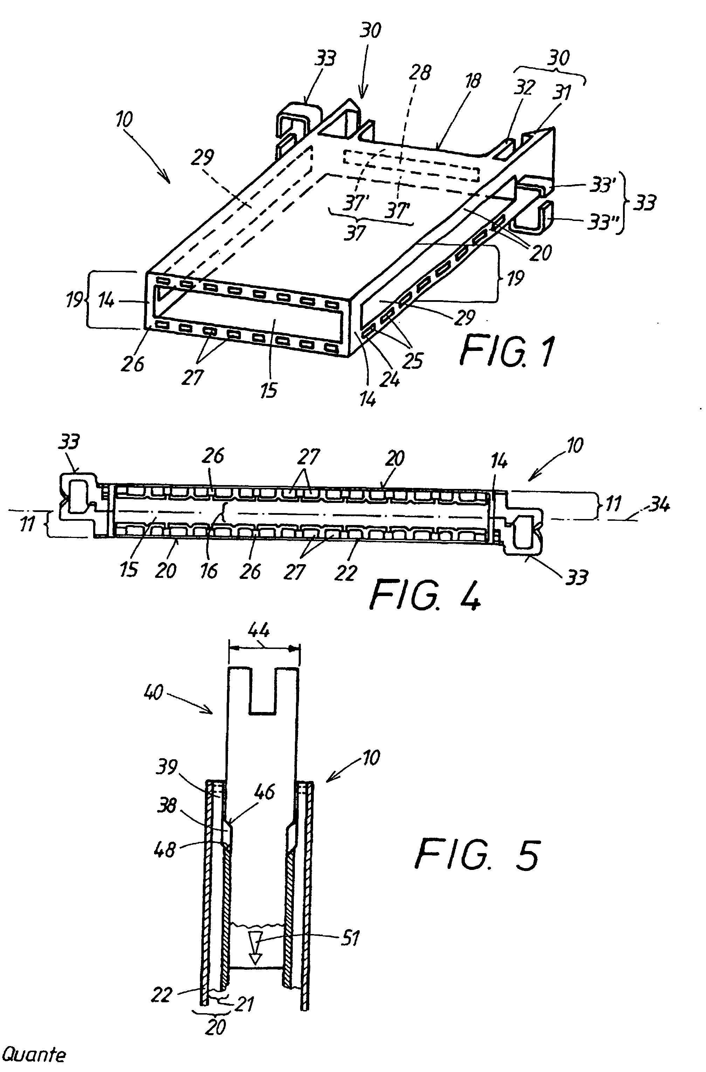

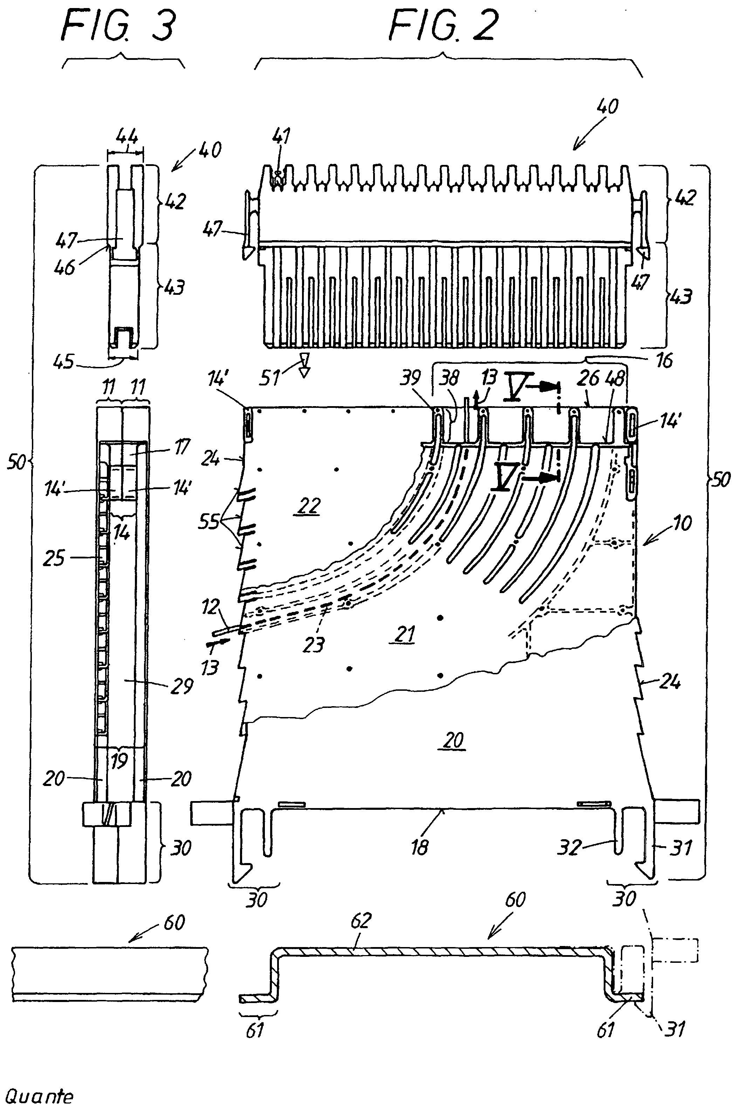

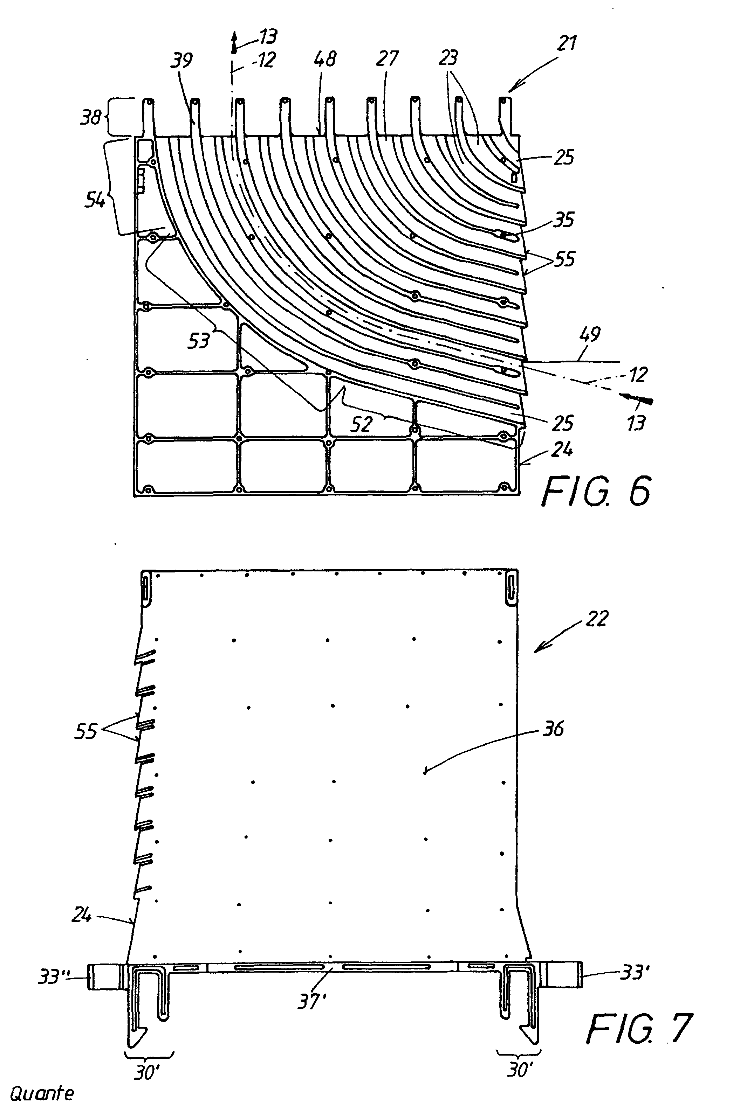

Die Erfindung besteht aus einem in besonderer Weise gestalteten Gehäuse 10, das vorteilhaft aus zueinander formgleich gestalteten Gehäusehälften 11 gestaltet sein kann. Das Gehäuse 10 ist in Form eines schmalen rechteckförmigen Kastens gestaltet, dessen Breitseiten aus sogenannten "Drahtführungsscheiben" 20 bestehen, die, wie aus Fig. 5 bis 7 hervorgeht, doppelwandig 21, 22 ausgebildet sind. Zwischen den beiden Wänden 21, 22 werden bogenförmige Kanäle 23 eingeschlossen, die zum Hindurchfädeln der diversen, nur beispielsweise in Fig. 2 angedeuteten Ader 12 dienen. Diese Ader 12 ist, zusammen mit einer Vielzahl weiterer Adern, Bestandteil von Kabeln, die in dieser Einrichtung angeschlossen, rangiert, kontaktiert oder getrennt werden sollen. Dazu werden die Adern 12 im Sinne der in Fig. 2 beim Gehäuse 10 angedeuteten Pfeile 13 stückweise durch die einzelnen Kanäle 23 hindurchgefädelt. Entsprechend dieser Durchfädelungsrichtung 13 entstehen dadurch an der einen Seitenkante 24 Eintrittsöffnungen 25 für die Kanäle 23, während ihre Austrittsöffnungen 27 an der Oberkante 26 der Drahtführungsscheibe 20 zu liegen kommen. Die eine Scheibe 20 des Gehäuses 10 dient zum Durchfädeln der ankommenden Adern 12 eines Kabels, während die zugehörigen abgehenden Adern eines anderen Kabels, die mit den vorgenannten zusammenwirken sollen, in der gegenüberliegenden Scheibe 20 des gleichen Gehäuses angeordnet sind. Die Kanäle 23 dieser beiden Scheiben 20 verlaufen in zueinander spiegelbildlicher Weise; treten zwar gemeinsam an der Scheiben-Oberkante 26 mit ihren Austrittsöffnungen 27 aus, wie aus Fig. 4 hervorgeht, doch befinden sich, wie teilweise aus Fig. 1 zu entnehmen ist, die zugehörigen Eintrittsöffnungen 25 an den zueinander gegenüberliegend angeordneten Scheiben-Seitenkanten 24.

Das kastenförmige Gehäuse 10 kommt dadurch zustande, dass ein solches Paar von Drahtführungsscheiben 20 mit einander komplettierenden Endstegen 14 versehen ist. Jede Gehäusehälfte 11 besitzt einen Teilbereich 14' eines solchen Endstegs. Das so gebildete Gehäuse ist zu seiner Oberseite hin offen und erzeugt dort die aus Fig. 1 und 4 erkennbare Oberöffnung 15. Die Oberöffnung 15 umgrenzt mit den beiden Drahtführungsscheiben 20 und den Endstegen 14 eine Aufnahmebuchse 16, die zum Einstecken der diesem Gehäuse 10 zugeordneten, aus Fig. 2 und 3 ersichtlichen Anschlussleiste 40 dient. Die Anschlussleiste hat Kontaktglieder 41 zum Anschluss der aus den beidseitigen Scheiben-Kanälen 23 an der Oberkante 26 herausragenden Adern 12. Diese Kontakte 41 ragen aus dem Kopfbereich 42 heraus, während im Fußbereich 43 die Kontakte verbindende bzw. trennende Leitungsglieder integriert sind. Die in das Gehäuse 10 eingesteckte Anschlussleiste 40 ist in ihrer dortigen Kupplungslage durch Haltemittel 47 gesichert, die nur mit dem Gehäuse 10 zusammenwirken. Dazu besitzt das Gehäuse 10 komplementäre Angriffsstellen 17, die hier aus Einsenkungen in den beiden Endstegen 14 vorgesehen sind, in welche die Hakenenden der aus Fig. 2 ersichtlichen Haltemittel 47 eingreifen. Die Anschlussleiste 40 ist also nicht unmittelbar mit dem Träger 60 verbunden, der zu der Verteilungseinrichtung gemäß Fig. 2 und 3 gehört. Die Anschlussleiste 40 und das Gehäuse 10 bilden im Kupplungsfall eine Baueinheit 50, die gemeinsam, über ausschließlich gehäuseseitige Haltemittel 30 mit dem Träger 60 verbindbar ist.

Dazu kann der Träger als eine gleichförmig durchlaufende Profilschiene 60 gestaltet sein. Die Profilschiene 60 ist an der Rückwand eines Schaltschranks od. dgl. befestigt und besitzt gestreckt verlaufende Längsrandzonen 61 für den Angriff dieser Haltemittel 30. Die Profilschiene 60 besitzt im vorliegenden Fall ein aus Fig. 2 ganz unten ersichtliches Hutprofil 62. Die haltewirksamen Längsrandzonen 61 sind gleichsam von den "Hutkrempen" dieses Profils 62 gebildet. Diese Haltemittel 30 gehen von der Unterseite 18 des Gehäuses 10 aus, welche der vorerwähnten Oberöffnung 15 abgekehrt ist. Die Haltemittel 30 sind in zwei zueinander spiegelbildlichen Gruppen, wie am besten aus Fig. 1 und 2 zu erkennen ist, an der Gehäuseunterseite 18 vorgesehen und bestehen aus einem Hakenteil 31 einerseits und einem ihm vorgeschalteten Stützteil 32 andererseits. Wie anhand der strichpunktierten Lage der Haltemittel an der Profilschiene 60 von Fig. 2 zu erkennen ist, hintergreift der Hakenteil 31 mit seinem Hakenkopf die Längsrandzone 61 der Schiene, während der Stützteil 32, welcher der Hakenöffnung vorgeschaltet ist, an der gegenüberliegenden Flächenseite der Längsrandzone 61 zur Anlage kommt. Die beiden Teile 31, 32 fassen also die Längsrandzone 61 der Schiene 60 zwischen sich. Durch entsprechende schräge Auflaufflächen im Hakenkopf lassen sich die Haltemittel 30 durch eine Schnappbewegung mit der Profilschiene 60 verbinden. Dies ist sehr bequem vollziehbar. Die Profilschiene 60 hat einen denkbar einfachen und damit preiswert herstellbaren Aufbau. Die zur Befestigung der ganzen Baueinheit 50 dienenden gehäuseseitigen Haltemittel 30 befinden sich, im Vergleich mit den zur Festlegung der Anschlussleiste 40 am Gehäuse 10 dienenden vorbeschriebenen Haltemitteln 47 an einer nach einer ganz anderen Richtung weisenden Stelle der Baueinheit 50. Während die leistenseitigen Haltemittel 47 zur Gehäuseschmalseite 19 hin gerichtet sind, befinden sich, wie bereits erwähnt wurde, die gehäuseseitigen Haltemittel 30 an der Gehäuse-Unterseite 18. Eine ungewollte Betätigung dieser Haltemittel 47, 30 kann bei Betätigung des jeweils anderen Haltemittels 30, 47 also nicht vorkommen.

An den Gehäuse-Schmalseiten 19 befinden sich Seitenöffnungen 29, die zum Einschieben von zusätzlichen Einsätzen ins Gehäuse dienen. Solche, nicht näher gezeigte Einsätze, können aus Überspannungsschutz-Einrichtungen, aus Meßeinrichtungen bzw. Prüfeinrichtungen oder anderen elektrischen Bauteilen bestehen. Diese Einsätze komplettieren also lediglich die zugehörige Baueinheit 50 und stehen unmittelbar in Verbindung mit dem Träger 60, wie im Stand der Technik. Auch dies führt zu der glatten, einfachen Form der Schiene 60.

Schließlich besitzt auch die Gehäuse-Unterseite 18 Bodenöffnungen 28. Diese dienen zum Durchführen von nicht näher gezeigten Massekontaktierungen für die im Gehäuseinneren befindlichen vorerwähnten Einsätze. Diese Bodenöffnung 28 ist ähnlich, wie die Seitenöffnung 29, schlitzförmig gestaltet. Die beiden vorerwähnten Haltemittel 30 schließen diese Bodenöffnung 28 zwischen sich.

Die beiden Schmalseiten 19 des Gehäuses sind mit Ösen 33 versehen, welche einerseits die zu dieser Baueinheit 50 gehörenden ankommenden Adern 12 und andererseits die entsprechenden abgehenden Adern andererseits bündeln und führen. Wegen der vorbeschriebenen Teilung des Gehäuses 10 in zwei Gehäusehälften 11 besteht jede dieser Öffnungen 33 aus zwei Teilbereichen 33', 33", die ausweislich der Fig. 1 sich paarweise zu einer vollen Öse 33 komplettieren. Die Ösen 33 sind unterhalb der vorbeschriebenen Seitenöffnungen 29 am Gehäuse 10 angeordnet und ragen über die dortigen Schmalseiten 19 hinaus. Im übrigen sind die Ösen bezüglich der die Teilung des Gehäuses 10 in Fig. 4 veranschaulichten Längsmittenebene 34 versetzt angeordnet und ragt dabei über die von der Außenwand 22 der Drahtführungsscheibe 20 bestimmten Breitseite des Gehäuses 10 hervor.

Ausweislich der Fig. 5 bis 7 besteht jede der beiden Drahtführungsscheiben 20 aus zwei zueinander unterschiedlichen Wänden 21, 22, nämlich einer profilierten Innenwand 21 und einer im wesentlichen ebenen Außenwand 22. Die Profilierung der Innenwand 21 entsteht durch die dort eingeformten Kanäle 23. Dies kann sich aus Materialersparnisgründen im Bereich der Kanalrippen auch in einer höhlenförmigen Struktur auf der Innenfläche dieser Innenwand 21 auswirken, wie aus dem Ausbruch der vorderen Scheibe 20 im Gehäuse 10 von Fig. 2 zu erkennen ist. Die beiden Wände 21, 22 sind durch in Fig. 6 und 7 erkennbaren Löcher 35 und Stifte 36 miteinander fest verbunden. Nur die eine der beiden Wände, wie die im wesentlichen ebene Außenwand 22, kann die aus Fig. 7 ersichtlichen Teilbereiche 30' für die aus beiden Gehäusehälften 11 schließlich komplettierten Haltemittel 30 aufweisen, wie auch an gegenüberliegenden Schmalseiten die bereits beschriebenen Ösen-Teilbereiche 33', 33". Der Teilbereich 37' kann eine aus Fig. 1 komplett ersichtliche Bodenwand 37 aufweisen, in welcher sich die bereits beschriebene Bodenöffnung 28 befindet.

Die Anschlussleiste 40 ist, wie am besten aus Fig. 3 zu ersehen ist, höhengestuft, womit der bereits erwähnte Kopfbereich 42 gegenüber dem Fußmaß 45 ein verbreitertes Kopfmaß 44 besitzt. Dementsprechend ist die Aufnahmebuchse 16 im Inneren des Gehäuses 10 mit einer das Kopfmaß 44 berücksichtigenden Aussparung 38 versehen. Diese ist sowohl aus Fig. 2 als auch aus Fig. 5 zu erkennen. Im vorliegenden Fall entsteht die Aussparung 38 einfach dadurch, dass in diesem Bereich die Innenwand 21, abgesehen von weiterführenden Kanalrippen 39 gemäß Fig. 6, weggelassen ist. Wird die Anschlussleiste 40 im Sinne des Einsteckpfeils 51 eingesteckt, dann stößt sie mit ihrer Absatzstufe 46 zwischen dem Kopf- und Fußbereich 42, 43 an die zurückgesetzte Wandkante 48 der Innenwand 21. Der mit der Verbreiterung 44 ausgerüstete Kopfbereich 42 der Leiste 40 füllt die Aussparung 38 im Kupplungsfall aus.

Um den bereits teilweise beschriebenen Durchfädelungsvorgang 13 der Adern 12 durch die Kanäle 32 zu erleichtern, weisen diese einen besonderen bogenförmigen Verlauf auf, was von eigenständiger erfinderischer Bedeutung ist. Dies lässt sich am besten anhand der durch die Kanäle 23 profilierten Innenwand 21 von Fig. 6 erläutern.

Die Eintrittsöffnungen 25, welche sich an der in Fig. 6 rechts liegenden, noch näher zu beschreibenden Scheiben-Seitenkante 24 befinden, haben einen gestreckten Verlauf an ihrem dort zu liegen kommenden Kanal-Einlauf 52. Dieser Einlauf 52 läuft tangential in den sich daran anschließenden Bogenverlauf 53 weiter. Dieser Einlauf 52 hat eine Neigung gegenüber einer in Fig. 6 angedeuteten Vertikalen 49 zu der von dieser Scheiben-Seitenkante 24 schließlich mitbestimmten Gehäuseschmalseite 19, die aus Fig. 1 zu erkennen ist. Die am gegenüberliegenden Ende der Kanäle 23 befindlichen Ausläufe 54 können daher, wie Fig. 6 zeigt, bogenförmig gekrümmt enden und im wesentlichen lotrecht zu der dortigen Wandkante 48 enden. Dadurch ergibt sich nach dem Durchfädeln der durch die Strichpunktlinie 12 in Fig. 6 verdeutlichte Verlauf einer eingeführten Ader. Im Bereich des Einlaufes 52 gibt es keine Störungen durch das im wesentlichen gestreckt verlaufende Kanalstück 52. Dann, durch die allmählich einsetzende Bogenform 53, kommt es mit zunehmend eingeführter Länge zu einer störungsfreien Krümmung, die sich dann ohne weiteres im Auslauf 54 auswirken kann. Die Durchfädelungsarbeit 13 ist besonders leichtgängig.

Zur Einführhilfe ist die Scheiben-Seitenkante 24 im Bereich der aus Fig. 6 ersichtlichen Eintrittsöffnungen 25 mit zahnförmigen Stufungen 55 versehen. Im vorliegenden Fall sind die Stufungen 55 jeweils über zwei benachbarte Kanäle 23 hinweggeführt. Natürlich ist auch die entsprechende Seitenkante 24 der gegenüberliegenden Außenwand 22 ebenfalls mit den gleichen zahnförmigen Stufungen 55 versehen, wie aus Fig. 7 zu ersehen ist.

### Bezugszeichenliste:

- 10: Gehäuse
- 11: Gehäusehälfte von 10
- 12: Ader
- 13: Durchfädelungspfeil für 12
- 14: Endsteg
- 14': Teilbereich von 14
- 15: Oberöffnung
- 16: Aufnahme-Buchse in 10 für 40
- 17: Angriffsstelle für 47 bei 10
- 18: Gehäuse-Unterseite von 10
- 19: Gehäuse-Schmalseite von 10
- 20: Drahtführungsscheibe (Breitseite)
- 21: profilierte Innenwand von 20
- 22: im wesentlichen ebene Außenwand von 20
- 23: bogenförmiger Kanal, Scheibenkanal
- 24: Scheiben-Seitenkante von 20
- 25: Eintrittsöffnung in 23
- 26: Scheiben-Oberkante von 20
- 27: Austrittsöffnung von 23
- 28: Bodenöffnung in 18
- 29: Gehäuse-Seitenöffnung in 19
- 30: Haltemittel für 50
- 30': Teilbereich von 30
- 31: Hakenteil von 30
- 32: Stützteil von 30
- 33: Öse
- 33': erster Teilbereich von 33
- 33": zweiter Teilbereich von 33
- 34: Längsmittenebene durch 10
- 35: Loch-Element in 21
- 36: Stift-Element an 22
- 37: Bodenwand von 10
- 37': Teilbereich von 37
- 38: Aussparung in 16
- 39: Kanalrippe bei 38
- 40: Anschlußleiste
- 41: Anschlußkontakte in 40
- 42: Kopfbereich von 40
- 43: Fußbereich von 40
- 44: verbreitertes Kopfmaß von 42
- 45: verengtes Fußmaß von 43
- 46: Absatzstufe in 40
- 47: Haltemittel für 40
- 48: Wandkante von 21
- 49: Vertikale zu 24
- 50: Baueinheit aus 10, 40
- 51: Einsteck-Pfeil für 40 in 16
- 52: Einlauf von 23
- 53: Bogenverlauf von 23
- 54: Auslauf von 23
- 55: zahnförmige Stufung bei 24

- 60: Träger, Profilschiene
- 61: Längsrandzone von 60
- 62: Hutprofil

## Patentansprüche

1. Verteilereinrichtung mit Anschlusskontakten (41) für Fernmelde-, Signal-, Steuerkabel od. dgl. zum Verbinden, Rangieren bzw. Trennen einer Vielzahl von ankommenden und abgehenden Adern (12) dieser Kabel,
mit einer Vielzahl von Drahtführungsscheiben (20), die bogenförmige Kanäle (23) zum Hindurchfädeln der Adern (12) beinhalten, und die Kanäle (23) ihre Eintrittsöffnungen (25) an der einen Seitenkante und ihre Austrittsöffnungen (27) an der Oberkante der Drahtführungsscheibe (20) aufweisen,
mit einer Vielzahl von Adern (12) verbindenden Anschlussleisten (40) oder Anschlussleisten mit Öffnungskontakten sowie Überspannungsschutzmöglichkeiten für diejenigen Adern (12), die aus den Kanal-Austrittsöffnungen (27) benachbarter Drahtführungsscheiben (20) heraustreten,
und mit einem linearen Träger (60), entlang welchem die Drahtführungsscheiben (20) mit den Anschlussleisten (40) in Reihenfolge nebeneinanderliegend gestapelt und über Haltemittel (30) befestigt sind und sich dabei quer zum Trägerverlauf erstrecken,
bei der Paare von Drahtführungsscheiben (20) über Endstege (14) jeweils zu kastenförmigen Gehäusen (10) fest miteinander verbunden sind,
und bei der die an die Anschlussleisten (40) anzuschließenden ankommenden und abgehenden Adern (12) durch die beidseitigen Scheiben-Kanäle (23) dieser Gehäuse (10) hindurchgefädelt sind,
und bei der nur die Gehäuse (10) die unmittelbar am Träger (60) angreifenden Haltemittel (30) tragen,
**dadurch gekennzeichnet ,**
**dass** das Gehäuse (10) zur Oberseite hin offen ist und mit seiner diese Oberöffnung (15) rechteckförmig umgrenzenden beiden Drahtführungsscheiben (20) einerseits sowie zwei Endstegen (14) andererseits eine Aufnahmebuchse (16) zum Einstecken einer dem Gehäuse (10) zugeordneten Anschlussleiste (40) bildet,
und die zur Anschlussleiste (40) gehörenden Haltemittel (47) in Form einer lösbaren Verbindung am Gehäuse (10) angreifen,
und das Gehäuse (10) zusammen mit der darin eingekuppelten Anschlussleiste (40) eine Baueinheit (50) bildet, welche gemeinsam über die am Gehäuse angeformten Haltemittel (30), am Träger (60) befestigt ist.

2. Einrichtung nach Anspruch 1, **dadurch gekennzeichnet, dass** die am Träger (60) angreifenden Haltemittel (30) von der zum Einkuppeln der Anschlussleiste (40) dienenden Oberöffnung (15) des Gehäuses (10) weggerichtet sind und an der Unterseite (18) des Gehäuses (10) sitzen.

3. Einrichtung nach Anspruch 1 oder 2, **dadurch gekennzeichnet, dass** die Angriffsstellen (17) für die Haltemittel (47) der Anschlussleiste (40) an den beiden, jeweils die Schmalseiten (19) des Gehäuses (10) bestimmenden Endstegen (14) angeordnet sind.

4. Einrichtung nach einem oder mehreren der Ansprüche 1 bis 3, **dadurch gekennzeichnet, dass** wenigstens die eine, vorzugsweise aber beide Schmalseiten (19) des Gehäuses (10) Seitenöffnungen (29) aufweisen zum Einschieben von zusätzlichen Einsätzen im Gehäuse (10), wie Überspannungs-Schutz-Einrichtungen, elektrische Bauelemente, Mess- bzw. Prüf-Einrichtungen od. dgl..

5. Einrichtung nach einem oder mehreren der Ansprüche 1 bis 4, **dadurch gekennzeichnet, dass** die Unterseite (18) des Gehäuses (10) eine dem Träger (60) zugekehrte Bodenöffnung (28) aufweist zum Durchführen von Massekontaktierungen für die im Gehäuseinneren befindlichen Einsätze.

6. Einrichtung nach Anspruch 5, **dadurch gekennzeichnet, dass** die am Träger (60) angreifenden Haltemittel (30) in zwei Gruppen geteilt sind, die zwischen sich die Bodenöffnung (28) schließen und die Bodenöffnung (28) schlitzförmig gestaltet ist.

7. Einrichtung nach einem oder mehreren der Ansprüche 1 bis 6, **dadurch gekennzeichnet, dass** mindestens an der einen, vorzugsweise aber an beiden Schmalseiten (19) des Gehäuses (10) Ösen (33) angeordnet sind, welche die zu dieser Baueinheit gehörenden ankommenden und/oder abgehenden Adern (12) bündeln, und dass die Öse (33) unterhalb der Seitenöffnungen (29) des Gehäuses (10) angeordnet ist und über die Schmalseiten (19) des Gehäuses (10) vorsteht und dass die Öse (33) bezüglich einer durch die Aufnahmebuchse (16) gelegten Längsmittenebene (34) versetzt angeordnet ist und über die von der Außenwand (22) der Drahtführungsscheibe (20) bestimmten Breitseite des Gehäuses (10) übersteht.

8. Einrichtung nach einem oder mehreren der Ansprüche 1 bis 7, **dadurch gekennzeichnet, dass** die bogenförmigen Kanäle (23) in der Drahtführungsscheibe (20) im Bereich ihrer Eintrittsöffnungen (25) einen den späteren Bogenverlauf (53) tangential beginnenden, gestreckten Einlauf (52) zum leichten Durchfädeln (13) der Adern (12) aufweisen, dass die Kanäle (23) der Drahtführungsscheiben (20) im Bereich ihrer Austrittsöffnungen (27) einen bogenförmig gekrümmten Auslauf (54) aufweisen und dass der Einlauf (52) der Kanäle (23) bezüglich einer auf die Schmalseite (19) des Gehäuses (10) gesetzten Vertikalen (49) geneigt verläuft, während der Auslauf (54) der Kanäle (23) im wesentlichen lotrecht zur Oberkante (26) der Drahtführungsscheibe (20) endet.

9. Einrichtung nach einem oder mehreren der Ansprüche 1 bis 8, **dadurch gekennzeichnet, dass** die Seitenkante (24) der Drahtführungsscheibe (20), welche die Eintrittsöffnungen (25) der Kanäle (23) aufweist, zahnförmig gestuft (55) ist, diese Stufung (55) dem einfachen, zweifachen oder mehrfachen Abstand benachbarter Kanäle (23) entspricht und eine Einführhilfe zum Einfädeln (13) der Adern (12) bildet.

10. Einrichtung nach einem oder mehreren der Ansprüche 1 bis 9, **dadurch gekennzeichnet, dass** mindestens die eine, vorzugsweise aber beide Drahtführungsscheiben (20) an ihren die Aufnahmebuchse (16) im Gehäuse (10) bestimmenden Innenwänden (21) Aussparungen (38) aufweisen, in welche im Kupplungsfall die Anschlussleiste (40) eingesteckt wird.

11. Einrichtung nach einem oder mehreren der Ansprüche 1 bis 10, **dadurch gekennzeichnet, dass** das Gehäuse (10) aus zwei zueinander formgleichen Gehäusehälften (11) besteht, die in spiegelbildlicher Position miteinander verbunden sind.

12. Einrichtung nach Anspruch 11, **dadurch gekennzeichnet, dass** die Gehäusehälfte (11) zwar eine komplette Drahtführungsscheibe (20) aufweist, aber die Drahtführungsscheibe (20) ihrerseits aus zwei zueinander unterschiedlich gestalteten Wänden (21, 22) zusammengesetzt ist, nämlich aus einer durch die eingeformten Kanäle (23) profilierten Wand (21) und einer im wesentlichen ebenen Wand (22) und dass die beiden Wände (21, 22) durch angeformte Loch-Stift-Elemente (36) miteinander verbunden sind.

13. Einrichtung nach einem oder mehreren der Ansprüche 1 bis 12, **dadurch gekennzeichnet, dass** der Träger (60) aus einer Profilschiene (60) besteht, deren beide Schienenlängszonen (61) im Befestigungsfall der Baueinheit (50) von den am Gehäuse angeformten Haltemitteln (30) umgriffen werden, dass die am Gehäuse (10) befestigten und am Träger (60) angreifenden Haltemittel (30) aus einem Hakenteil (31) und aus einem der Hakenöffnung vorgeordneten Stützteil (32) bestehen, welche im Befestigungsfall eine Längsrandzone (61) der Profilschiene (60) zwischen sich fassen, und dass die Profilschiene (60) ein Hut-Profil (62) aufweist, an dessen Hut-Krempen die Haltemittel (30) des Gehäuses (10) angreifen.

## Claims

1. Distributor device with connection contacts (41) for telecommunication, signal or control cables or similar for connecting, grading or separating a multiplicity of incoming and outgoing leads (12) of these cables, with a multiplicity of wire guidance plates (20) containing arch-shaped channels (23) for threading through the leads (12) and the channels (23) have their entrance openings (25) on one side edge and their exit openings (27) on the upper edge of the wire guidance plate (20),
with a multiplicity of connecting strips (40) connecting leads (12) or connecting strips with opening contacts and also excess voltage protection means for those leads (12) which emerge from the channel exit openings (27). of adjacent wire guidance plates (20)
and with a linear carrier (60), along which the wire guidance plates (20) with the connecting strips (40) are stacked in order lying next to one another and are fixed via holding means (30) and therein extend crosswise to the course of the carrier,
in which pairs of wire guidance plates (20) are rigidly connected to one another via end webs (14) to form in each case box-shaped housings (10)
and in which the incoming and outgoing leads (12) to be connected to the connecting strips (40) are threaded through the plate channels (23) of these housings (10) on both sides,
and in which only the housings (10) carry the holding means (30) acting directly on the carrier (60),
**characterised in that** the housing (10) is open towards the upper side and with its two wire guidance plates (20) bordering this upper opening (15) in the shape of a rectangle on the one side and also two end webs (14) on the other side forma a receiving sleeve (16) for inserting a connecting strip (40) allocated to the housing (10)
and the holding means (47) belonging to the connecting strip (40) act on the housing (10) in the form of a detachable connection
and the housing (10), together with the connecting strip (40) coupled into it, forms a constructional unit (50) which is jointly fixed to the carrier (60) via the holding means (30) molded on to the housing.

2. Device according to claim 1, **characterised in that** the holding means (30) acting on the carrier (60) are directed away from the upper opening (15) of the housing (10) serving to couple in the connecting strip (40) and fit on the underside (18) of the housing (10).

3. Device according to claim 1 or 2, **characterised in that** the contact points (17) for the holding means (47) of the connecting strip (40) are arranged on the two end webs (14) defining in each case the narrow sides (19) of the housing (10).

4. Device according to one or more of claims 1 to 3, **characterised in that** at least one of, but preferably both, the narrow sides (19) of the housing (10) have side openings (29) for putting in additional inserts in the housing (10), such as excess voltage protection devices, electrical constructional elements, measuring or testing devices or similar.

5. Device according to one or more of claims 1 to 4, **characterised in that** the underside (18) of the housing (10) has a floor opening (28) facing the carrier (60) for carrying out earth contacts for the inserts located inside the housing.

6. Device according to claim 5, **characterised in that** the holding means (30) acting on the carrier (60) are divided into two groups, which between them close the floor opening (28) and the floor opening (28) is configured in the shape of a slit.

7. Device according to one or more of claims 1 to 6, **characterised in that** at least on one of, but preferably on both, the narrow sides (19) of the housing (10) eyes (33) are arranged, which bundle the incoming and/or outgoing leads (12) belonging to this constructional unit and the eye (33) is arranged below the side openings (29) of the housing (10) and projects above the narrow sides (19) of the housing (10) and the eye (33) is arranged as offset with respect to a longitudinal central plane (34) laid through the receiving sleeve (16) and protrudes above the wide side of the housing (10) defined by the outer wall (22) of the wire guidance plate (20).

8. Device according to one or more of claims 1 to 7, **characterised in that** the arch-shaped channels (23) in the wire guidance plate (20) in the area of their entrance openings (25) have an extended inlet (52), tangentially beginning the later arched course (53) to make it easy to thread through (13) the leads (12), the channels (23) of the wire guidance plates (20) in the area of their exit openings (27) have an outlet (54) curved in an arch-shape and the inlet (52) of the channels (23) runs at an incline with respect to a vertical line (49) placed on the narrow side (19) of the housing (10) *[sic]*, while the outlet (54) of the channels (23) ends substantially perpendicular to the upper edge (26) of the wire guidance plate (20).

9. Device according to one or more of claims 1 to 8, **characterised in that** the side edge (24) of the wire guidance plate (20) which has the entrance openings (25) of the channels (23) is graduated in a tooth-shape (55), this graduation (55) corresponds to once, twice or several times the distance between adjacent channels (23) and forms an insertion aid for threading in (13) the leads (12).

10. Device according to one or more of claims 1 to 9, **characterised in that** at least one of, but preferably both, the wire guidance plates (20) have on their inner walls (21), defining the receiving sleeve (16) in the housing (10), recesses (38) into which the connecting strip (40) is inserted during coupling.

11. Device according to one or more of claims 1 to 10, **characterised in that** the housing (10) consists of two housing halves (11), identical in shape to one another and connected to one another in mirror-image position.

12. Device according to claim 11, **characterised in that**, though the housing half (11) has a complete wire guidance plate (20), the wire guidance plate (20) on its part is composed of two walls (21, 22) configured differently from one another, namely of a wall (21) profiled by the molded-in channels (23) and a substantially flat wall (22), and the two walls (21, 22) are connected to one another by molded-on hole and pin elements (36).

13. Device according to one or more of claims 1 to 12, **characterised in that** the carrier (60) consists of a profiled rail (60), the two rail longitudinal zones (61) of which are encompassed by the holding means (30) molded on to the housing during fixing of the constructional unit (50), the holding means (30), fixed to the housing (10) and acting on the carrier (60), consist of a hooked part (31) and a supporting part (32) arranged in front of the hooked opening, which during fixing grip a longitudinal edge zone (61) of the profiled rail (60) between them and the profiled rail (60) has a cap profile (62), on the cap rims of which the holding means (30) of the housing (10) act.

## Revendications

1. Dispositif de répartition ayant des contacts de raccordement (41) pour câbles téléphoniques, de signalisation, de commande ou similaires pour relier, ranger ou séparer une pluralité de brins arrivants et sortants (12) de ces câbles,
ayant une pluralité de plaques de guidage de fils (20), qui incorporent des canaux incurvés (23) pour enfiler les brins (12), les canaux (23) ayant leurs ouvertures d'entrée (25) sur une arête latérale et leurs ouvertures de sortie (27) sur l'arête supérieure de la plaque de guidage de fils (20),
ayant une pluralité de barrettes de raccordement (40) reliant des brins (12) ou de plaques de raccordement ayant des contacts d'ouverture ainsi que des moyens de protection contre les surtensions pour les brins (12) qui sortent des ouvertures de sortie de canal (27) de plaques de guidage de fils voisines (20),
et ayant un support linéaire (60) le long duquel les plaques de guidage de fils (20), s'étendant transversalement à la direction du support, sont empilées côte à côte en succession avec les barrettes de raccordement (40) et fixées par l'intermédiaire de moyens de fixation (30),
dans lequel des plaques de guidage de fils (20) sont reliées par paires et maintenues fermement par des traverses d'extrémités respectives (14) pour former des boîtiers (10) en forme de coffret,
et dans lequel les brins entrants et sortants (12) à raccorder aux plaques de raccordement (40) sont enfilés dans les canaux de plaque bilatéraux (23) de ce boîtier (10),
et dans lequel seuls les boîtiers (10) portent les moyens de fixation (30) qui saisissent directement le support (60),
**caractérisé en ce que** le boîtier (10) est ouvert sur la face supérieure et forme, d'une part avec ses deux plaques de guidage de fils (20) entourant rectangulairement cette ouverture supérieure (15), et d'autre part avec deux traverses d'extrémités (14), un compartiment de réception (16) pour l'enfichage d'une barrette de raccordement (40) associée au boîtier (10),
et les moyens de fixation (47) appartenant à la barrette de raccordement (40) saisissant le boîtier (10) sous la forme d'une connexion détachable,
et le boîtier (10) forme, avec la barrette de raccordement (40) couplée dans celui-ci, une unité structurelle (50) qui est fixée au support (60) par l'intermédiaire des moyens de fixation (30) formés sur le boîtier.

2. Dispositif selon la revendication 1, **caractérisé en ce que** les moyens de fixation (30) saisissant le support (60). sont situés à l'opposé de l'ouverture supérieure (15) du boîtier (10) servant à coupler la barrette de raccordement (40) et se trouvent à la base (18) du boîtier (10).

3. Dispositif selon la revendication 1 ou 2, **caractérisé en ce que** les emplacements de saisie (17) pour les moyens de fixation (47) des barrettes de raccordement (40) sont disposés sur les deux traverses d'extrémité (14) définissant respectivement les petits côtés (19) du boîtier (10).

4. Dispositif selon une ou plusieurs des revendications 1 à 3, **caractérisé en ce qu'**au moins un, mais de préférence les deux petits côtés (19) du boîtier (10) présentent des ouvertures latérales (29) pour insérer des pièces supplémentaires dans le boîtier (10), telles que des dispositifs de protection contre les surtensions, des composants électriques, des dispositifs de mesure ou de contrôle ou similaires.

5. Dispositif selon une ou plusieurs des revendications 1 à 4, **caractérisé en ce que** la face inférieure (18) du boîtier (10) présente une ouverture de fond (28) tournée vers le support (60) pour la réalisation de contacts de masse pour les pièces se trouvant à l'intérieur du boîtier.

6. Dispositif selon la revendication 5, **caractérisé en ce que** les moyens de fixation (30) saisissant le support (60) sont divisés en deux groupes qui ferment l'ouverture de fond (28) entre eux, et l'ouverture du fond (28) est agencée forme de fente.

7. Dispositif selon une ou plusieurs des revendications 1 à 6, **caractérisé en ce que** sur au moins un, mais de préférence les deux petits côtés (19) du boîtier (10) sont disposés des oeillets (33) qui rassemblent les brins arrivants et/ou sortants (12) appartenant à cette unité structurelle, **en ce que** l'oeillet (33) est disposé en dessous des ouvertures latérales (29) du boîtier (10) et est saillant sur les petits côtés (19) du boîtier (10), et **en ce que** l'oeillet (33) est décalé par rapport à un plan médian longitudinal (34) passant par le compartiment de réception (16) et dépasse de la largeur du boîtier (10) définie par la paroi externe (22) de la plaque de guidage de fils (20).

8. Dispositif selon l'une ou plusieurs des revendications 1 à 7, **caractérisé en ce que** les canaux incurvés (23) de la plaque de guidage de fils (20) présentent, dans la zone de leurs ouvertures d'entrée (25), une portion d'entrée rectiligne (52), démarrant tangentiellement au tracé incurvé ultérieur (53) pour l'enfilage facile (13) des brins (12), **en ce que** les canaux (23) des plaques de guidage de fils (20) présentent dans la zone de leurs ouvertures de sortie (27) une portion de sortie incurvée (54), et **en ce que** la portion d'entrée (52) des canaux (23) est inclinée par rapport à une verticale (49) placée sur le petit côté (19) du boîtier (10), alors que la portion de sortie (54) des canaux (23) se termine sensiblement perpendiculairement à l'arête supérieure (26) de la plaque de guidage de fils (20).

9. Dispositif selon une ou plusieurs des revendications 1 à 8, **caractérisé en ce que** l'arête latérale (24) de la plaque de guidage des fils (20), qui présente les ouvertures d'entrée (25) des canaux (23), est étagée en forme de dents, cette étagement (55) correspond à une fois, deux fois ou plusieurs fois la distance entre canaux voisins (23) et forme une aide à l'introduction pour l'enfilage (13) des brins (12).

10. Dispositif selon une ou plusieurs des revendications 1 à 9, **caractérisé en ce qu'**au moins une, mais de préférence les deux plaques de guidage de fils (20) présentent, sur leurs parois intérieures (21) délimitant le compartiment de réception (16) dans le boîtier (10), des évidements (38) dans lesquels les barrettes de raccordement (40) sont enfichées en cas de couplage.

11. Dispositif selon une ou plusieurs des revendications 1 à 10, **caractérisé en ce que** le boîtier (10) se compose de deux moitiés de boîtier (11) de même forme, reliées entre elles dans une disposition en miroir.

12. Dispositif selon la revendication 11, **caractérisé en ce qu'**alors que les moitiés de boîtier (11) présentent chacune une plaque de guidage de fils complète (20), la plaque de guidage de fils (20), pour sa part, est composée de deux parois (21, 22) conçues différemment, à savoir une paroi (21) profilée par les canaux (23) qui y sont formés et une paroi (22) sensiblement plane, et **en ce que** les deux parois (21, 22) sont reliées entre elles par des éléments tige-trou (36) qui y sont formés.

13. Dispositif selon une ou plusieurs des revendications 1 à 12, **caractérisé en ce que** le support (60) consiste en un rail profilé (60) dont les deux zones longitudinales (61) sont saisies par les moyens de fixation (30) formés sur le boîtier en cas de fixation de l'unité structurelle (50), **en ce que** les moyens de fixation (30) fixés sur le boîtier (10) et saisissant le support (60) se composent d'une partie crochet (31) et d'une partie appui (32) faisant face à l'ouverture du crochet, qui saisissent entre elles une zone de rebord longitudinal (61) du rail profilé (60) en cas de fixation, et **en ce que** le rail profilé (60) présente un profil en chapeau (62) sur les rebords duquel les moyens de fixation (30) du boîtier (10) s'agrippent.
